# EUROPEAN PATENT SPECIFICATION

(11) **EP 0 751 882 B1**
(45) Date of publication and mention of the grant of the patent: **15.12.1999**
(21) Application number: 95912509.7
(22) Date of filing: 23.03.1995
(51) Int. Cl.: B60R 21/04, F16F 7/12, B60J 5/04

(54) **HONEYCOMB STRUCTURE FOR CRASH PROTECTION STRUCTURES**
WABENKÖRPER FÜR AUFPRALLSCHUTZ-STRUKTUREN
STRUCTURE EN NID D'ABEILLES POUR STRUCTURES DE PROTECTION EN CAS DE COLLISION

(30) Priority: 23.03.1994 NL 9400461
(43) Date of publication of application: 08.01.1997
(60) Divisional application: 99201447.2
(73) Proprietor: BESIN B.V., 3851 BD Ermelo (NL)
(72) Inventor: DIDERICH, Johannes, Philippus, Ludovicus, Maria, NL-3851 BD Ermelo (NL)
(74) Representative: Ferguson, Alexander
(86) International application number: NL9500112
(87) International publication number: WO9525646

(56) References cited:
- DE-A- 1 941 600
- DE-A- 2 158 086
- GB-A- 2 130 524
- NL-A- 8 902 882
- PATENT ABSTRACTS OF JAPAN vol. 9 no. 179 (M-399) [1902] ,24 July 1985 & JP,A,60 049144 (YOKOHAMA GOMU K.K.) 18 March 1985,

## Description

The invention relates to a honeycomb structure, intended for crash protection structures, in particular intended to be incorporated into a car door.

A honeycomb structure as described in the preamble of claim 1 is known from DE-A-2.158.086.

Honeycomb panels are very well known. They consist of a core of honeycomb-shaped spaces, which are defined by raised walls, generally formed by parallel vertical strips of a certain material, which are situated next to one another in trapezoidal corrugated patterns and are adhered to each other so as to define substantially hexagonal cells. On one or both main sides of the core, carrier plates have been adhered.

Honeycomb panels can be made of cellulose material, such as cardboard or paper, but also of a synthetic. The cells of the honeycomb-shaped core can be filled with for instance an isolating material, such as polystyrene foam. Honeycomb panels are inexpensively manufactured from naturally flexurally slack material, but as a whole they have a high compression resistance against compression in a direction perpendicular to the main plane. Honeycomb panels are therefore often used as filling material for, for instance, packings of white goods. It is also quite possible to realize a door as a honeycomb panel, the carrier plates then being made of wood and the core of paper.

A special application of honeycomb panels is that, in which pallets are made thereof. The pallet feet are therein built up of a plurality of honeycomb panels attached to one another with the main planes, the feet also being adhered to a honeycomb panel forming the bearing surface for the load to be carried by the pallet.

The compression strength and the energy-absorbing deformation behaviour, in a direction Perpendicular to the main plane, of honeycomb panels also render them suitable to be incorporated into structures having to absorb forces released during crashes in which cars are involved. For fixed structures, one could think of bridge pillar protection structures. However, it would also be possible to incorporate honeycomb panels into parts of a car, for instance in the hollow space of a car door.

Thus, a honeycomb structure for car panels is known, comprising a plurality of honeycomb panels, made from sheets of cellulose material impregnated with a hardening impregnating agent, such as formaldehyde. When being incorporated into a car door, this structure serves to absorb, to an important degree, the impact force and the force developed by the inertia of the person sitting next to the door, during a lateral collision. The formaldehyde checks the moisture absorption by the cellulose material so as not to let the strength and deformation properties deteriorate as a consequence thereof.

Although such known honeycomb structures in car doors appear to function fairly satisfactorily in case of collisions, a drawback to the known structure is that the cellulose material has to be impregnated in a step requiring energy, effort and special provisions. The impregnated honeycomb structures are also harmful from an environmental point of view, because it constitutes chemical waste, which has to be separately removed and processed when the cars concerned are scrapped.

It is an object of the invention to improve upon this.

To this end the invention provides the honey comb structure as defined in Claim 1.

The applicant has gained the surprising insight that the circumstances under which the honeycomb structures are present in car doors, do not have an unacceptably deteriorating effect, due to the entrance of moisture, on the strength and deforming properties of the honeycomb structures. In relevant standard tests, in particular the climate varying test as usual in the car industry and geared to the product, it has been found that after the honeycomb structure has been very damp, it once again relinguishes the moisture and almost ends up in the original condition. The applicant has realized that this reversibility renders honeycomb structures of honeycomb panels of for instance cellulose material suitable, without treatment with moisture-proof agents, for use in car doors to absorb collision forces and deformations. The manufacture of the required honeycomb structure is consequently very simple. All that is necessary is to cut a plurality of honeycomb panels from standard honeycomb panels at the desired contours and to stack them into a honeycomb structure which fits into the interior of a car door. At the end of the cycle of use of the car concerned, the honeycomb structure does not form environmentally unfriendly waste and can even be re-used.

According to a preferred embodiment of the honeycomb structure according to the invention, the honeycomb panels are kept against each other by means of a casing which at least locally encloses the structure. Consequently, it is not necessary to apply adhesives to keep the honeycomb panels on top of each other. Preferably, the honeycomb structure is entirely enclosed by the casing. This casing protects the honeycomb structure against all sorts of influences during transport and storage thereof. It is therein advantageous if the casing is made of moisture-impermeable material, such as polyethene film, so that also under abnormal, extreme climatic conditions, in particular in the case of long, continuously high relative humidity, the honeycomb structure according to the invention will continue to have its effect.

According to a particularly advantageous further development of the honeycomb structure according to the invention, at least two adjacent honeycomb panels have a different compression resistance in plane. In this way, it can be prevented that the force-deformation diagram has a distinct peak in the first part, and that instead a trapezoidal force-deformation diagram is realized.

It is preferred that therein the difference in compression resistance is due to a difference in diameter of the cells of the honeycomb panels concerned.

The invention will now be further described by means of a number of exemplary embodiments represented in the accompanying drawings. The following is shown in:
figure 1: a perspective view on a honeycomb structure according to the invention, seen from one side;
figure 2: the honeycomb structure according to figure 1, seen in perspective from the other side;
figure 3: the honeycomb structure of figure 1, wrapped in film;
figure 4: the honeycomb structure according to figure 1, incorporated into a car door; and
figure 5: a cross-section of the honeycomb cells of a honeycomb panel.

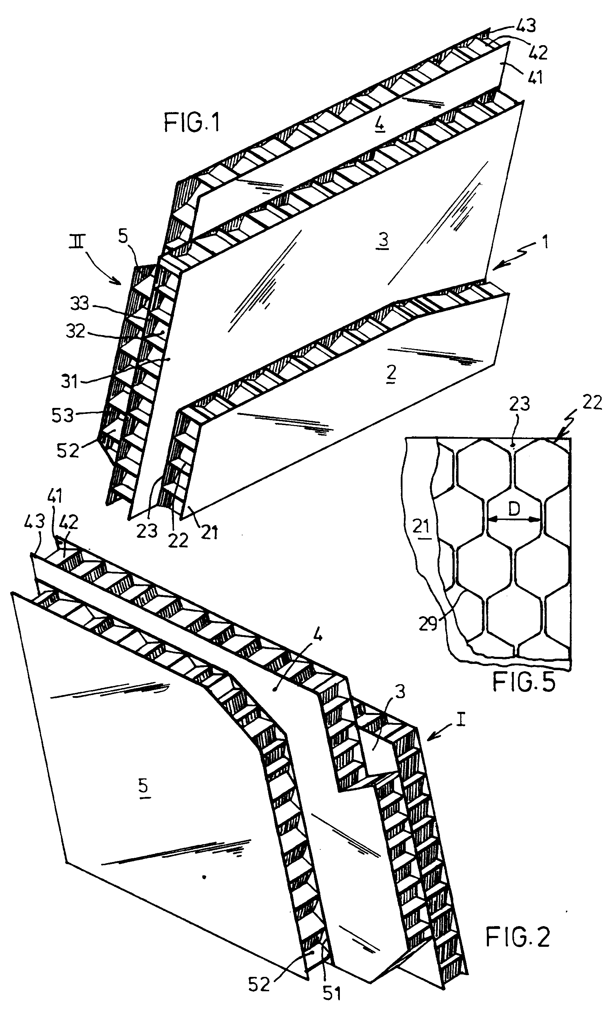

The honeycomb structure 1 in figure 1 comprises four honeycomb panels with differing contour, namely the honeycomb panels 2, 3, 4 and 5. The honeycomb panels 2, 3, 4 and 5 are situated with their lower edges in one plane, but in different planes with the other edges.

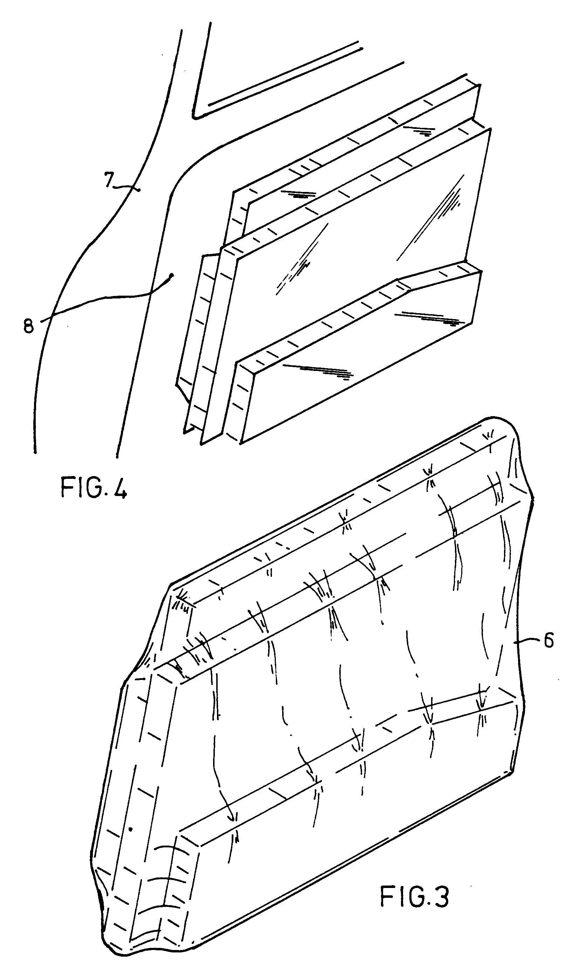

Each honeycomb panel comprises a first plate, 21, 31, 41 and 51, respectively, a honeycomb core, 22, 32, 42 and 52, respectively, and a second plate, 23, 33, 43 and 53, respectively. The first and second plates and the intermediate honeycomb cores form as it were a sandwich structure, which can in principle be used for many purposes. In the combined state, as shown in figures 1 and 2, the honeycomb structure 1 is particularly suited to be incorporated into the interior 8 of a car door 7, as shown in figure 4. For this purpose, the honeycomb panels 2, 3, 4 and 5 are adhered to each other by the plates 23 and 31, 33 and 41, 43 and 51 by means of a suitable adhesive. The contours of the plates 2, 3, 4 and 5 are adapted to the interior 8 of the car door 7 into which the honeycomb structure 1 should be incorporated.

Figure 5 shows how the core has been built up. The core 22 is formed by a series of vertical, corrugated strips 29, turned over on one panel edge and running back, while forming hexagonal cells with adjacent strips.

In this example, the honeycomb panels are made of paper of the "testliner" quality, 100% recycled, multilayered, although it will be clear that kraftliner can also be used as an alternative. The paper mass of the material used in all panels 2, 3, 4 and 5 is 150 g/m². The panels are each 18 mm thick.

What is special now is that the cell diameter D, represented schematically in figure 5, in the panels 2 and 3 is smaller than the cell diameter in the panels 4 and 5. The former cell diameter is here 13 mm, while the cell diameter in the panels 4 and 5 is 19 mm. This deviation in cell diameter surprisingly achieves that the peak in the force-deformation diagram during compression in plane is drastically reduced, so that the force deformation diagram approximates a rectangular shape and the deformation behaviour will consequently be more even and more predictable.

By composing the honeycomb structure from panels with differing resistance, the deformation behaviour, too, can be influenced in order to let this be progressive, as is achieved in this example by successively placing two layers with a cell diameter of 13 mm and two layers with a cell diameter of 19 mm in the direction of collision.

The honeycomb structure 1 has been found to well withstand the standard tests, performed to determine the suitability of the honeycomb structure for use as crash pad in car doors. It has been found that after the honeycomb structure has been very damp, it will once again relinquish this moisture and end up in almost the original condition. This surprisingly sufficient measure of reversibility does not make it desirable to impregnate the paper for the intended application with, for instance, formaldehyde, so that effort and costs can be saved and the environment will in the end also be less polluted. Moreover, the use of formaldehyde would increase the mass. It should be pointed out that for a single panel, the maximum attainable compression strength in plane is determined by the cell diameter and the paper mass. It is herein the most advantageous to have as small a cell diameter as possible. When a certain optimum has been attained, then with increasing paper mass the cell diameter should become smaller in order to maintain that optimum. In many cases this will not be possible, however, because the cell diameter already has minimal dimensions.

Instead of attaching the honeycomb panels 2, 3, 4 and 5 to each other by means of an adhesive, the honeycomb structure formed by those panels can be sealed in a casing 6 of polyethene film. This shrinking film ensures that the panels will be kept together, without the use of adhesives, at the correct mutual orientation. Moreover, the film prevents the material of the honeycomb structure from being influenced too much under extreme circumstances.

It is possible to cut the panels 2 and 3 or 4 and 5, respectively, from one initial honeycomb panel and, then to cut it in at the location of the lower edges up to the plates 23/31 and 43/51, in order to there form hinging lower edges about which the panels 2 and 3 or 4 and 5, respectively, can be turned over and against each other. The film 6 then ensures that the panels are kept together in that position.

It is further remarked that the use of adhesive will in many cases be preferred because when the film 6 is used, the honeycomb panels will first have to be dried before they can be packed up.

## Claims

1. Honeycomb structure (1), comprising a plurality of honeycomb panels (2, 3, 4, 5) placed with their main sides against each other and having a compression resistance in the plane in a direction perpendicular to their main sides and parallel to their honeycomb cell axises, the honeycomb panels being made of a cellulose material, which is sensitive to moisture action as far as strength is concerned, but which is free from added moisture-proof means, characterized by the contours of the panels differing and being adapted to the interior (8) of a car door (7), at least two adjacent honeycomb panels having a different compression resistance in the plane, the difference in compression resistance being due to a difference in diameter of the cells of the honeycomb panels concerned.

2. Honeycomb structure according to claim 1, wherein the diameter of the cells in the outer panel (5) that is located on the impact side is smaller than the diameter of the cells in another panel (2, 3).

3. Honeycomb structure according to claim 2, the panels (2, 3, 4, 5) being kept against each other by means of a casing which at least locally encloses the structure.

4. Honeycomb structure according to claim 3, being entirely enclosed by the casing.

5. Honeycomb structure according to claim 4, the casing (6) being made of moisture-impermeable material, such as polyethene film.

6. Honeycomb structure according to any one of the preceding claims, comprising more than two honeycomb panels (2, 3, 4, 5), the outer honeycomb (2, 5) panels having a contour which is smaller than the contour of an intermediate honeycomb panel (3, 4)

## Patentansprüche

1. Wabenstruktur (1) die eine Anzahl Wabenplatten (2, 3, 4, 5) umfaßt die mit ihren Hauptseiten gegeneinander gesetzt sind und die einen Zusammendruckwiderstand in der Fläche in eine Richtung senkrecht auf ihren Hauptseiten und parallel zu ihren Wabenzellenachsen, haben, wobei die Wabenplatten aus einem Zellulose-Material, das was die Stärke betrifft Feuchtigkeitseinwirkungsempfindlich ist, aber das von feuchtigkeitsfesten Mitteln frei ist, hergestellt sind, dadurch gekennzeichnet, daß die Konturen der Platten verschieden sind und an der Innenseite (8) eines Autotürs (7) angepaßt sind, worin mindestens zwei nebeneinander gelegene Wabenplatten einen verschiedenen Zusammendruckwiderstand in der Fläche haben, wobei der Unterschied in Zusammendruckwiderstand die Folge eines Unterschieds in Zellendiameter der betreffenden Wabenplatten ist.

2. Wabenstruktur gemäß Anspruch 1, wobei der Diameter der Zellen in der äußeren Platte (5) die an der Einschlagseite liegt, kleiner ist als der Diameter der Zellen in einer anderen Platte (2,3).

3. Wabenstruktur gemäß Anspruch 2, wobei die Platten (2, 3, 4, 5) durch eine Umhüllung die zumindest örtlich die Struktur umschließt gegeneinander gehalten werden.

4. Wabenstruktur gemäß Anspruch 3, die ganz durch die Umhüllung umschlossen wird.

5. Wabenstruktur gemäß Anspruch 4, wobei die Umhüllung (6) aus feuchtigkeitsundurchlässigem Material, wie einer Polyethylenfolie, besteht.

6. Wabenstruktur gemäß einem der vorhergehenden Ansprüche, die mehr als zwei Wabenplatten (2, 3, 4, 5) umfaßt, wobei die äußeren Wabenplatten (2, 5) eine Kontur haben, die kleiner ist als die Kontur einer zwischengelegenen Wabenplatte (3, 4).

## Revendications

1. Structure en nid d'abeilles (1), comprenant une pluralité de panneaux en nid d'abeilles (2, 3, 4, 5) placés avec leurs côtés principaux l'un contre l'autre et ayant une résistance à la compression dans le plan dans une direction perpendiculaire à leurs côtés principaux et parallèles à leurs axes, de cellules en nid d'abeilles, les panneaux en nid d'abeilles étant réalisés en cellulose, laquelle est sensible à l'action de l'humidité dans la mesure où la résistance mécanique est concernée, mais est exempte de moyens additionnels d'étanchéité à l'humidité, caractérisée par le fait que les contours des panneaux diffèrent et sont adaptés à l'intérieur (8) d'une porte de véhicule (7), en ce qu'au moins deux panneaux en nid d'abeilles adjacents ayant une résistance à la compression différente dans le plan, et en ce que la différence de résistance à la compression est due à une différence des diamètres des cellules des panneaux en nid d'abeilles concernés.

2. Structure en nid d'abeilles selon la revendication 1, caractérisée en ce que le diamètre des cellules dans le panneau extérieur (5) qui est situé sur le côté exposé aux chocs est plus petit que le diamètre de cellules dans un autre panneau (2, 3).

3. Structure en nid d'abeilles selon la revendication 2, caractérisée en ce que les panneaux (2, 3, 4, 5) sont maintenus chacun l'un contre l'autre au moyen d'une enveloppe qui enferme au moins localement la structure.

4. Structure en nid d'abeilles selon la revendication 3, caractérisée en ce qu'elle est entièrement enveloppée par l'enveloppe.

5. Structure en nid d'abeilles selon la revendication 4, caractérisée en ce que l'enveloppe (6) est réalisé en un matériau imperméable à l'humidité, tel qu'un film de polyéthylène.

6. Structure en nid d'abeilles selon l'une quelconque des revendications précédentes, comprenant plus de deux panneaux en nid d'abeilles (2, 3, 4, 5) les panneaux en nid d'abeilles extérieurs (2, 5) ayant un contour qui est plus petit que le contour d'un panneau en nid d'abeilles intermédiaire (3, 4).
